# EUROPEAN PATENT APPLICATION

(11) **EP 4 666 862 A1**
(43) Date of publication of application: **24.12.2025**
(21) Application number: 24183413.4
(22) Date of filing: 20.06.2024
(51) Int. Cl.: A23G 1/02, A23G 1/34, A23G 1/48, A23L 2/38, A23L 11/50

(54) **FERMENTED ROASTED CAROB**

(71) Applicant: Foreverland Food Srl, 70014 Conversano (BA) (IT)
(72) Inventor: Bottiroli, Riccardo, 27058 Voghera PV (IT); Brochetta, Massimo, 27058 Voghera PV (IT)
(74) Representative: Di Giovine, Paolo

(57) **Abstract**

The present invention relates to a method for the preparation of a fermented roasted carob, in particular a fermented roasted carob powder which can be used as base ingredient characterized by a color, sensory profile, and volatile compounds similar to cocoa powder. Furthermore, the present invention relates to a fermented roasted carob obtained by the method of the invention. Moreover, the present invention relates to the use of the fermented roasted carob for replacing up to 100% of roasted cocoa and in products based on or containing cocoa and in various forms (powder, liquid, solid).

## Description

### FIELD OF THE INVENTION

The present invention relates to a method for the preparation of a fermented roasted carob, in particular a fermented roasted carob powder which can be used as base ingredient characterized by a color, sensory profile, and volatile compounds similar to cocoa powder. Furthermore, the present invention relates to a fermented roasted carob obtained by the method of the invention. Moreover, the present invention relates to the use of the fermented roasted carob for replacing up to 100% of roasted cocoa and in products based on or containing cocoa and chocolate and in various forms (powder, liquid, solid).

### BACKGROUND OF THE INVENTION

Cocoa is an important agricultural commodity and the key raw material in chocolate manufacturing. Cacao tree (Theobroma cacao L.) is cultivated in humid, warm and rainy areas located between 20 degrees south and 20 degrees north of the equator. Cocoa cultivation requires a large amount of water (1000-4000 mm/year) and it is sensitive to periods of excessive rain or drought. The demand for cocoa beans has been increasing from about 4.6 billion tonnes in 2016 to 5.7 billion tonnes in 2020, resulting in deforestation of large wildlife areas. Cocoa is largely produced in developing countries, but it is mostly consumed in developed countries. The main cocoa growing areas are West Africa, South-East Asia and South America and the major cocoa producing countries are Ivory Coast, Ghana, Indonesia, Nigeria, Cameroon, Brazil, Ecuador, the Dominican Republic and Malaysia. Some of these countries are affected by instability due to political and social changes. Moreover, besides strong socio-economic problems, cocoa beans need to undergo very long transportations which greatly increases the cost and the carbon footprint of the final product.

Accordingly, the increasing demand for cocoa, its rising price and the environmental impact of cocoa production urges the discovery of cocoa powder substitutes. In this context, a potential substitute is carob. Carob is a local crop of the Mediterranean area, mostly grown in Spain, Italy and Portugal. Differently from cocoa trees, Ceratonia siliqua (carob tree) is a xerophytic (drought-resistant) species (water requirement between 250 and 500 mm/year) well adapted to the Mediterranean region's ecological conditions. Given the rising climatic crisis, this plant requires low water inputs and pests treatments. Currently, the seeds from carob pods are used for the production of locust bean gum (LBG, E-410), a thickening agent and stabilizer in foods, whereas the pulp and pods are either discarded or used for animal feed so far.

At research level, the employment of carob pods and pulp as a valuable cocoa replacer is currently under investigation by researchers in different product applications such as chocolate, milk chocolate drinks and cakes. In the chocolate application, despite the development of chocolate using carob instead of cocoa appeared feasible, an increasing replacement of cocoa with carob significantly decreased the overall product acceptability, with chocolate including 80% carob powder having the lowest among the tested samples.

This means that, although carob is a promising candidate to replace cocoa in chocolate-like formulation, there is a need to provide a method for the preparation of a fermented roasted carob to be used as food ingredient without the disadvantages of the prior art.

### SUMMARY OF THE INVENTION

The technical problem addressed and solved by the present invention is to provide a fermented roasted carob, and a method for its preparation that yields a carob-based ingredient with a color, sensory profile, and volatile compounds similar to cocoa powder. This ingredient aims to replace cocoa in various food products, including chocolate, chocolate-based snacks, cocoa-based and chocolate-based drinks. This problem is solved by the present invention.

Advantageously, the authors of the present invention have discovered that the perfected method described here allows for the preparation of a fermented roasted carob. Compared to methods described in prior art documents, the method presented here has the significant advantage of producing an ingredient capable of replacing cocoa powder.

Hence, objects of the present invention are:
a method for preparing a fermented roasted carob comprising the following steps:
i) fermenting carob pulp by a yeast belonging to the genus *Saccharomyces*;
ii) roasting the fermented carob obtained from step i).
   a fermented roasted carob obtainable with the method of the present invention,
   use of a fermented roasted carob according to the present invention in the preparation of food products or beverages preferably as a cocoa powder replacer in the preparation of food products or beverages, more preferably a chocolate, a dark chocolate or a milk chocolate, a cocoa-free chocolate, a vegan cocoa-free chocolate, snacks, biscuits, coatings, fillings, ganaches, mousses, puddings, chocolate drinks.
   a food product or beverage comprising the fermented roasted carob according to the present invention preferably wherein said food product or beverage is chocolate,
   preferably a dark chocolate or a milk chocolate, a cocoa-free chocolate, a vegan cocoa-free chocolate, snacks, biscuits, coatings, fillings, ganaches, mousses, puddings, chocolate drinks.

In each part of the present description, the term "comprising" can be replaced by the term "consisting of".

Further advantages and/or embodiments of the present invention will be evident from the following detailed description.

### DETAILED DESCRIPTION OF THE FIGURES

**Figure 1****:** General experimental overview of fermented and roasted carob powder involving the starting from carob pulp.
**Figure 2****:** Changes in the concentration of fructose through the fermentation of the carob pulp. The inoculated microbes consist of *S*. *Cerevisiae (Y) and* a *combination* of *S*. *Cerevisiae, L. plantarum, A. aceti* (Y+LAB+AAB).

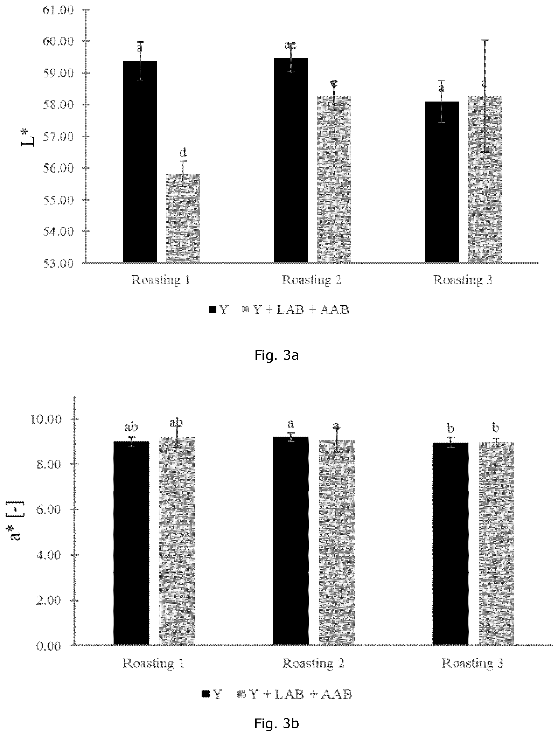

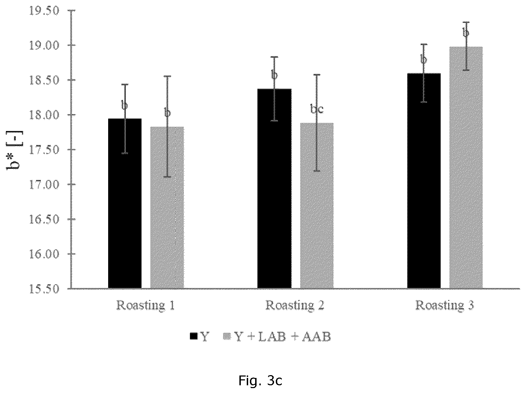

**Figure 3****:** CIELAB colour values of L*, a* and b* for the roasted carob powder with different fermentation processes: *S*. *cerevisiae* (Y) and *S*. *cerevisiae, L. plantarum* (LAB), and *A. aceti* (Y+LAB+AAB). Data is based on means from duplicate fermentations (n=2) with error bars indicating the +-SD.

### GLOSSARY

Before the methods of the present disclosure are described in greater detail, it is to be understood that the methods are not limited to particular embodiments described, as such may, of course, vary. It is also to be understood that the terminology used herein is for the purpose of describing particular embodiments only and is not intended to be limiting.

Where a range of values is provided, it is understood that each intervening value, to the tenth of the unit of the lower limit unless the context clearly dictates otherwise, between the upper and lower limit of that range and any other stated or intervening value in that stated range, is encompassed within the methods. The upper and lower limits of these smaller ranges may independently be included in the smaller ranges and are also encompassed within the methods, subject to any specifically excluded limit in the stated range. Where the stated range includes one or both of the limits, ranges excluding either or both of those included limits are also included in the methods. Certain ranges may be presented herein with numerical values being preceded by the term "about." The term "about" is used herein to provide support for the exact number that it precedes, as well as a number that is near to or approximately the number that the term precedes. In determining whether a number is near to or approximately a specifically recited number, the near or approximating number may be a number which, in the context in which it is presented, provides the substantial equivalent of the specifically recited number. Specifically, the term "about" in reference to a measurement, such as roasting time and temperature, indicates an estimate of plus or minus 0.5 from the indicated value. According to the present invention, the term "carob" means the fruit of Ceratonia siliqua, including both seeds and siliques.

According to the present invention, the term "carob pulp", or alternatively "raw carob pulp" means a product derived by carob pods using physical manipulation, i.e. cutting and crushing into pieces and mechanical separation of the pulp from the seeds.

The carob used in the preparation process is preferably carob commonly used in the food industry, obtained from mature carob pods.

According to the present invention, the term "ground carob pulp" means a raw carob pulp which has been ground or milled in order to reduce the particle diameter dimension.

### DETAILED DESCRIPTION OF THE INVENTION

Unless defined otherwise, all technical and scientific terms used herein have the same meaning as commonly understood by one of ordinary skills in the art to which the methods belong. Although any methods similar or equivalent to those described herein can also be used in the practice or testing of the methods, representative illustrative methods and materials are now described.

It is appreciated that certain features of the methods, which are, for clarity, described in the context of separate embodiments, may also be provided in combination in a single embodiment. Conversely, various features of the methods, which are, for brevity, described in the context of a single embodiment, may also be provided separately or in any suitable sub-combination. All combinations of the embodiments are specifically embraced by the present invention and are disclosed herein just as if each and every combination was individually and explicitly disclosed, to the extent that such combinations embrace operable processes and/or devices/systems/kits. In addition, all sub-combinations listed in the embodiments describing such variables are also specifically embraced by the present methods and are disclosed herein just as if each and every such sub-combination was individually and explicitly disclosed herein.

As will be apparent to those of skill in the art upon reading this disclosure, each of the individual embodiments described and illustrated herein has discrete components and features which may be readily separated from or combined with the features of any of the other several embodiments without departing from the scope or spirit of the present methods. Any recited method can be carried out in the order of events recited or in any other order which is logically possible.

The present invention relates to a method for preparing a fermented roasted carob comprising the following steps:
i) fermenting carob pulp by a yeast belonging to the genus *Saccharomyces*;
ii) roasting the fermented carob obtained from step i).

The combination of a step of fermentation of carob pulp in the presence of yeast belonging to the genus *Saccharomyces,* and a step of roasting the fermented carob unexpectedly allowed to obtain a carob-based ingredient with enhanced and improved flavor, which is more suitable for the preparation of cocoa-free products, as it allows to eliminate or at least limit the unpleasant taste and smell notes typical of carob-based ingredients as well as providing flavor complexity to the final products.

In an embodiment, said yeast belonging to the genus *Saccharomyces* is selected from *S*. *cerevisiae, S. bayanus, S. chevalieri* or a combination thereof, preferably *S*. *cerevisiae.*

Common commercially available strains or variants of *S*. *cerevisiae, S. chevalieri and S.bayanus* can be used in the present invention.

In an embodiment, the step i) of fermentation of the present invention is carried out in the presence of a microorganism selected from lactic acid bacteria (LAB) or acetic acid bacteria (AAB), preferably *Lactobacillus plantarum, Acetobacter aceti* or a combination thereof. Common commercially available strains or variants of LAB and AAB can be used in the present invention.

In an embodiment, said yeast is present in a concentration from 1*10^5 to 1*10^8 CFU/g with respect to the dry mass of carob, preferably about 7*10^7 CFU/g with respect to the dry mass of carob with respect to the dry mass of carob.

Yeast is essential for the conversion of sucrose naturally contained in the carob pulp occurs by invertase activity converting sucrose into glucose and fructose. The yeast primarily converts glucose into ethanol, and produces flavor compounds like higher alcohols, esters, aldehydes, and organic acids.

Lactic acid bacteria (LAB) convert citric acid, glucose, and fructose primarily into lactic acid and pyruvate, whilst acetic acid bacteria (AAB) can consume the produced lactic acid and ethanol by converting it into acetic acid when ethanol peaks during aerobic fermentation. The AAB can further overoxidate acetic acid into CO₂ + H₂O. The ethanol, acetic acid, and flavor compounds can enter the carob pulp for further reactions during the roasting step, alongside reducing sugars and free amino acids via Maillard reaction.

In an embodiment, said LAB is present in a concentration from 1*10^6 to 1*10^9 CFU/g with respect to the dry mass of carob, preferably about 3.7*10^7 CFU/g with respect to the dry mass of carob.

In an embodiment, said AAB is present in a concentration from 1*10^5 to 7*10^8 CFU/g with respect to the dry mass of carob, preferably about 1.3*10^8 CFU/g with respect to the dry mass of carob.

In an embodiment, the method of the present invention further comprises a step of grinding said carob pulp before said fermentation step i) to a particle diameter from 0.03 to 1.5 cm.

The step of grinding can be carried out with the common milling or grinding techniques which are known to the skilled person.

In an embodiment, the method of the invention comprises a further step, wherein said carob pulp in the fermentation step i) is prepared by adding water, preferably the water is added in a weight ratio of carob:water from 1:1.5 to 1:4.

According to the present invention, water can be added as such to the raw carob pulp or to a ground carob pulp, i.e. water in the liquid state can be added and a semi-liquid mixture (when added to a ground carob pulp) or a mixture of carob pulp and water (when added to raw carob pulp) is obtained.

In a preferred embodiment, said step i) of fermentation is carried out at a temperature from 18 to 35 °C. Preferably the step of fermentation is carried out at a temperature of 23°C to 27°C, more preferably 25°C. Furthermore, said step of fermentation is carried out for at least 12 hours, preferably between 48 and 96 hours.

In a more preferred embodiment, said step ii) of roasting is carried out at least at a temperature of 120°C. Preferably, the step of roasting is carried out at a temperature between 140°C and 180°C, more preferably between 150°C and 160°C.

Furthermore, said step ii) of roasting is carried out for at least 15 minutes, preferably between 20 and 60 minutes.

Roasting is employed to promote a series of chemical reactions that contribute to the characteristic sensory attributes and color of the carob or carob material. During the roasting process, high temperatures induce the Maillard reaction, which involves sugars and proteins present in the ingredients. This reaction produces a range of chemical compounds, including aldehydes, ketones, and heterocyclic compounds, responsible for the distinctive aroma and flavor associated with roasting. Furthermore, the roasting process promotes the caramelization of carbohydrates present in the mixture.

In an embodiment, the method of the present invention further comprises a step of thermal sanitization before said step of fermentation. Preferably said thermal sanitization is a pasteurization step. The step of thermal sanitization allows to inactivate all the unwanted microorganisms or yeasts already present in the carob pulp, thereby allowing to carry out the fermentation only with the selected yeast, and optionally with the selected microorganism. In particular, said thermal sanitization is carried out at a temperature from 50 to 150°C, preferably 60°C, and/or for a time from 30 to 90 min, preferably 30 min.

In another embodiment, the method of the present invention further comprises a step of drying the fermented carob to a moisture content from 1% to 15% w/w, preferably from 6 to 9% of moisture w/w. This step allows the removal of the excess of water from the fermented carob thereby improving the roasting step.

In a preferred embodiment, the method of the present invention further comprises, after said step of roasting, a step of micronization thereby obtaining a fermented roasted carob powder. The step of micronization can be carried out according to any technique which is known to the skilled person.

In a preferred embodiment, the method of the present invention comprises the following steps:
i) optionally grinding carob pulp to a particle diameter from 0.03 to 1.5 cm,
ii) adding water to the ground carob pulp obtaining a wet carob pulp,
iii) fermenting the wet carob pulp by a *S*. *cerevisiae* yeast;
iv) optionally drying the fermented carob from step ii) to a moisture content from 6 to 9% w/w;
v) roasting the fermented carob obtained from step iii);
vi) optionally micronizing the fermented roasted carob from step iv) thereby obtaining a fermented roasted fine carob powder.

In more preferred embodiment, the method of the present invention comprises the following steps:
i) optionally grinding carob pulp to a particle diameter from 0.03 to 1.5 cm,
ii) adding water to the ground carob pulp obtaining a wet carob pulp,
iii) optionally thermal sanitization of the ground carob;
iv) fermenting carob pulp by a *S*. *cerevisiae* yeast;
v) optionally drying the fermented carob from step ii) to a moisture content from 6 to 9% w/w;
vi) roasting the fermented carob obtained from step iii);
vii) optionally micronizing the fermented roasted carob from step iv) thereby obtaining a fermented roasted fine carob powder.

In an alternative embodiment, the method of the present invention comprises the following steps:
i) grinding carob pulp to a particle diameter from 0.03 to 1.5 cm,
ii) adding water to the ground carob pulp obtaining a wet carob pulp,
iii) thermal sanitization of the ground carob pulp
iv) fermenting the wet carob pulp by a S. cerevisiae yeast and *L. plantarum;*
v) optionally drying the fermented carob from step ii) to a moisture content from 6% to 9% w/w;
vi) roasting the fermented carob obtained from step iii);
vii) optionally micronizing the fermented roasted carob from step iv) thereby obtaining a fermented roasted fine carob powder.

In an alternative embodiment, the method of the present invention comprises the following steps:
i) grinding carob pulp to a particle diameter from 0.03 to 1.5 cm,
iii) adding water to the ground carob pulp obtaining a wet carob pulp,
ii) thermal sanitization of the ground carob pulp
iv) fermenting the wet carob pulp by a *S*. *cerevisiae* yeast, *L. plantarum* and *A.aceti;*
v) optionally drying the fermented carob from step ii) to a moisture content from 6% to 9%% w/w;
vi) roasting the fermented carob obtained from step iii);
vii) optionally micronizing the fermented roasted carob from step iv) thereby obtaining a fermented roasted fine carob powder.

In such embodiment, wherein an acetic acid bacteria (AAB), i.e. A. aceti is used, the fermentation changed from anaerobic to aerobic through oxygenation.

In an embodiment, the fermented roasted carob of the present invention is obtainable by the method according to the present invention. Preferably, the fermented roasted carob of the present invention is obtained by the method according to the present invention.

The Authors found that in the fermentation of carob in the presence of a yeast belonging to the genus *Saccharomices,* sucrose is converted in fructose due to the presence of the invertase enzyme which is produced by said yeast, and fructose is not fully consumed during fermentation, remaining available for further reactions during the said roasting step. Therefore, the carob fermented in the presence of a yeast belonging to the genus *Saccharomices* has a residual fructose content.

Hence, the present invention also relates to a fermented carob characterized by a fructose concentration of at least 6% w/w, preferably about 8% w/w with respect to the total dry mass of the fermented carob.

The skilled person has knowledge on how to perform the measurement of the concentration of fructose in the fermented carob of the present invention.

An object of the present invention is also the use of the fermented roasted carob according to the present invention in the preparation of food products or beverages, and in general confectionary products comprising cocoa in their formulations. In a preferred embodiment, said food product or beverage is chocolate or cocoa-free chocolate, preferably a dark chocolate or a milk chocolate, a cocoa-free chocolate, a vegan cocoa-free chocolate, snacks, biscuits, coatings, fillings, ganaches, mousses, puddings, chocolate drinks. An alternative embodiment is also the use of the fermented roasted carob according to the present invention in the preparation of food products or beverages comprising the fermented roasted carob mixed to chocolate or cocoa.

An object of the present invention is the use of the fermented roasted carob according to the present invention as a cocoa powder substitute in the preparation of food products or beverages, and in general confectionary products comprising cocoa in their formulations, preferably a chocolate, a dark chocolate or a milk chocolate, a cocoa-free chocolate, a vegan cocoa-free chocolate, snacks, biscuits, coatings, fillings, ganaches, mousses, puddings, chocolate drinks.

Therefore, object of the present invention is also a food product or beverage comprising the fermented roasted carob according to the present invention, preferably wherein said food product or beverage is chocolate, preferably a dark chocolate or a milk chocolate, a cocoa-free chocolate, a vegan cocoa-free chocolate, snacks, biscuits, coatings, fillings, ganaches, mousses, puddings, chocolate drinks.

### EXAMPLES

### Materials and methods

### Overview

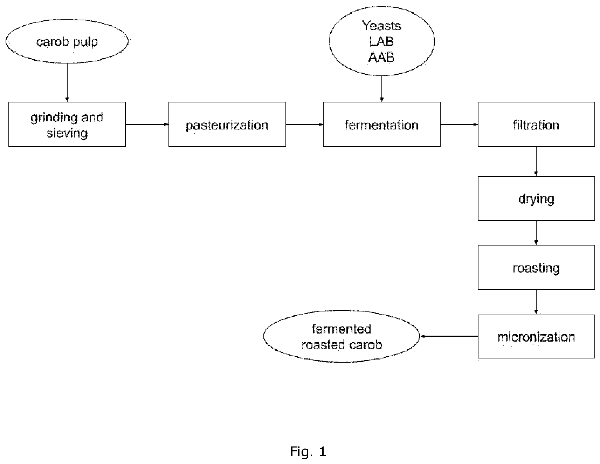

The overall process flow to produce a chocolate alternative from carob pulp is illustrated in Figure 1.

### Materials

The used raw material to produce carob powder was carob pulp sourced from Sicily (Italy).

In the fermentation process of carob pulp, two strains of yeast have been used, one LAB and one AAB.

In this example, the LAB was *L .plantarum* and it was added after 24 hours, whereas the AAB was *A. aceti* and was added after 48 hours.

### Preparation of bacterial inoculum

All work with bacteria strains was performed in a microbiological safety cabinet. OD600 measurements were performed before inoculation of the fermentations.

Carob pulp was grounded using a coffee grinder. The grounded carob pulp was passed through a 1.25 mm sieve to achieve equal particle size. To each 250 ml BlueCap bottle 45 g of dry matter of grounded carob pulp was added. Purified water was added in a ratio of 1 to 3.75. The BlueCap bottles were sealed and pasteurized in a water bath. The temperature for the mass was maintained for 30 min after reaching 60°C, before cooling it to 25°C in an ice bath.

Sanitized equipment was used for all measurements during fermentation to prevent contamination.

The moisture content of the mass after filtration was measured using a DBS 60-3 moisture analyzer (KERN & SOHN GmbH, Balingen, Germany). The mass was divided into muffin trays, each cup containing 4-6 g of mass. The mass was dried at 40°C in a dehydrator (Vita5, Gronsveld, the Netherlands) for ~10.5-11 h until the moisture content reached 7-9%. The samples were then roasted in an oven with a 20% airflow. The moisture content was measured after roasting before the samples were turned into powder. Grinding was performed using the 6875D Freezer/Mill^{™} (Cole-Parmer^{®}, Metuchen, USA), with two pre-cool cycles of 2 min each, one cooling cycle, and a total of two grinding cycles at a rate of 15 CPS. The powders were stored in closed containers at room temperature until further analysis.

Samples collected from the fermentations were analyzed for concentration of sucrose, glucose, fructose, by High-performance liquid chromatography (HPLC). The samples were prepared by transferring 0.2 g of sample to a 5 ml Eppendorf tube with purified water in a 1:15 ratio. The tubes were placed in an Eppendorf thermomixer (Eppendorf, Hamburg, Germany) at 50°C for 50 min at 1000 rpm and centrifuged at 5°C for 15 min at 3500 rpm. The supernatant was removed and filtered by RC membrane 0.2 µm filters. The filtered samples were transferred to HPLC vials for analysis.

### Colour measurement

The color of the carob powders was measured using a ColorFlex colorimeter (HunterLab, Virginia, USA). The calorimeter was calibrated before analyzing using color standard tiles (white and black). The colors were expressed according to the International Commission on Illumination (CIELAB) space values with the coordinates L* calculating brightness (0 = black to 100 = white), a* calculating green (-) to red (+), and b* calculating blue (-) to yellow (+). Each color value was obtained as the mean of six measurements with indicated standard deviation.

### Results

### Composition of used carob pulp

The fermentation mass of carob pulp and purified water was measured to understand the composition. The data analysis of the sugar composition indicated the same concentration of sugars in all fermentations. An average of the sugar concentration based on dry matter is illustrated in Table 5.

| **Sugars** | **Concentration [% d.m.]** |
|---|---|
| Sucrose | 31.56 ± 2.26 |
| Glucose | 6.75 ± 0.60 |
| Fructose | 6.06 ± 0.50 |

Sucrose had the highest concentration in the fermentation mass and the amounts of glucose and fructose were similar (Table 5).

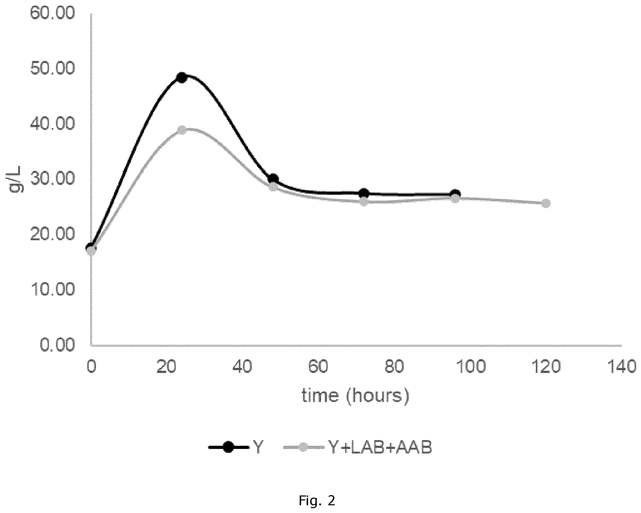

The concentration of sucrose, glucose, fructose was measured, throughout the fermentation time of carob pulp. Figure 2 illustrates the changes in the concentration of fructose throughout the fermentation process, either with only *S*. *Cerevisiae* (Y) or with the combination of *S*. *Cerevisiae, L. plantarum, A. aceti* (Y+LAB+AAB).

### Colour change in the fermented carob powders

The influence of different fermentations on the change in color at different roasting treatments was measured by the total change in color between the fermented carob powders compared to the control powder. Figure 6 illustrates the CIELAB color space values (L*, a*, and b*) for the different fermentation types and roasting treatments (Roasting 1, 2 and 3).

The fermented roasted carob powder of the present invention was also used as an ingredient to produce different types of chocolate that can then be used as such or as an ingredient in different composite foods. It is provided below a list of examples of regular chocolate (recipe and nutritional label), followed by a list of examples of cocoa-free chocolate comprising the carob powder of the present invention (recipe and nutritional label).

### Example regular milk chocolate (recipe + nutritional label)

### • Milk chocolate

| Ingredients | % |
|---|---|
| Fermented roasted carob | 0-50% |
| Cocoa Butter | 20-50% |
| Sugar/Sweeteners | 15-50% |
| Powdered Skim Milk/Partially skim/Whole Milk | 10-50% |
| Grain extract/flour/malt (oat/rice/barley/millet etc.) | 0-10% |
| Emulsifiers (lecithin etc.) | 0-2% |
| Flavoring ingredients | 0-2% |

### • Vegan Milk chocolate

| Ingredients | % |
|---|---|
| Fermented roasted carob | 0-50% |
| Cocoa Butter | 20-50% |
| Sugar/Sweeteners | 15-50% |
| Grain extract/flour/malt (oat/rice/barley/millet etc.) | 10-50% |
| Emulsifiers (lecithin etc.) | 0-2% |
| Flavoring ingredients | 0-2% |

### Example regular dark chocolate (recipe + nutritional label)

### • Dark chocolate

| Ingredients | % |
|---|---|
| Fermented roasted carob | 0-99% |
| Cocoa Butter | 20-40% |
| Sugar/Sweeteners | 15-30% |
| Emulsifiers (lecithin etc.) | 0-2% |
| Flavoring ingredients | 0-2% |

### Example cocoa-free chocolate (recipe + nutritional label)

### • Vegan Milk cocoa-free chocolate

| Ingredients | % |
|---|---|
| **Fermented roasted carob** | 0-50% |
| Vegetables fats | 20-50% |
| Sugar/Sweeteners | 15-50% |
| Grain extract/flour/malt (oat/rice/barley/millet etc.) | 0-40% |
| Emulsifiers (lecithin etc.) | 0-2% |
| Flavoring ingredients | 0-2% |

### • Milk cocoa-free chocolate

| Ingredients | % |
|---|---|
| Fermented roasted carob | 0-50% |
| Vegetables fats | 20-50% |
| Sugar/Sweeteners | 15-50% |
| Powdered Skim Milk/Partially skim/Whole Milk | 10-35% |
| Grain extract/flour/malt (oat/rice/barley/millet etc.) | 0-10% |
| Emulsifiers (lecithin etc.) | 0-2% |
| Flavoring ingredients | 0-2% |

### • Dark cocoa-free chocolate

| Ingredients | % |
|---|---|
| Fermented roasted carob | 0-50% |
| Vegetables fats | 20-50% |
| Sugar/Sweeteners | 10-20% |
| Grain extract/flour/malt (oat/rice/barley/millet etc.) | 0-30% |
| Herbs | 0-30% |
| Emulsifiers (lecithin etc.) | 0-2% |
| Flavoring ingredients | 0-2% |

### • White cocoa-free chocolate

| Ingredients | % |
|---|---|
| Fermented roasted carob | 0-15% |
| Vegetables fats | 20-40% |
| Sugar/Sweeteners | 15-50% |
| Powdered Skim Milk/Partially skim/Whole Milk | 10-30% |
| Grain extract/flour/malt (oat/rice/barley/millet etc.) | 0-10% |
| Emulsifiers (lecithin etc.) | 0-2% |
| Flavoring ingredients | 0-2% |

### • Vegan White cocoa-free chocolate

| **Ingredients** | % |
|---|---|
| **Fermented roasted carob** | 0-10% |
| Vegetables fats | 20-40% |
| Sugar/Sweeteners | 15-50% |
| Grain extract/flour/malt (oat/rice/barley/millet etc.) | 0-40% |
| Emulsifiers (lecithin etc.) | 0-2% |
| Flavoring ingredients | 0-2% |

### Nutritional composition dark and dark-like chocolate variants

| **Energy kcals** | **Protein** | **Fat** | **Carbohydrat es** | **Sugar** | **Fiber** |
|---|---|---|---|---|---|
| 450-700 | 0-10 | 35-50 | 10-60 | 10-60 | 1-10 |

### Nutritional composition milk and milk-like chocolate variants

| **Energy kcals** | **Protein** | **Fat** | **Carbohydrat es** | **Sugar** | **Fiber** |
|---|---|---|---|---|---|
| 450-700 | 0-10 | 35-50 | 10-60 | 10-60 | 1-10 |

### Nutritional composition dark-like chocolate variants

| **Energy kcals** | **Protein** | **Fat** | **Carbohydr ates** | **Sugar** | **Fiber** |
|---|---|---|---|---|---|
| 450-700 | 0-10 | 35-50 | 10-60 | 10-70 | 1-10 |

## Claims

1. A method for preparing a fermented roasted carob comprising the following steps:
i) fermenting carob pulp by a yeast belonging to the genus *Saccharomyces*;
ii) roasting the fermented carob obtained from step i).

2. The method according to claim 1, wherein said yeast belonging to the genus *Saccharomyces* is selected from *S*. *cerevisiae, S. bayanus, S. chevalieri* or a combination thereof, preferably *S*. *cerevisiae.*

3. The method according to any one of claims 1 or 2, wherein said step i) is carried out in the presence of a further microorganism selected from lactic acid bacteria and acetic acid bacteria or a combination thereof.

4. The method according to any one of claims 1 or 3, comprising a further step, wherein said carob pulp in the fermentation step i) is prepared by adding water, preferably the water is added in a weight ratio of carob:water from 1:1.5 to 1:4.

5. The method according to claim 3 or 4, wherein said step i) is carried out in the presence of a further microorganism selected from *Lactobacillus plantarum* and *Acetobacter aceti* or a combination thereof.

6. The method according to any one of claims 1 to 5, further comprising a step of grinding said carob pulp before said fermentation step i) to a particle diameter from 0.03 to 1.5 cm.

7. The method according to any one of claims 1 to 6, wherein said step i) of fermentation is carried out at a temperature from 18 to 35°C, preferably 23°C to 27°C, more preferably 25°C, and/or for at least 12 hours, preferably between 48 and 96 hours.

8. The method according to any one of claims 1 to 7, wherein said step ii) of roasting is carried out at least at a temperature of 120°C, preferably between 140°C and 180°C, more preferably between 150°C and 160°C, and/or for at least 15 minutes, preferably between 20 and 60 minutes.

9. The method according to any one of claims 1 to 8, further comprising a step of thermal sanitization pasteurization before said step of fermentation i), in particular wherein said thermal sanitization is carried out at a temperature from 50 to 150°C, preferably 60°C, and/or for a time from 30 to 90 min, preferably 30 min.

10. The method according to any one of claims 1 to 9, further comprising a step of drying the fermented carob to a moisture content from 1 to 15% w/w, preferably from 6 to 9% of moisture w/w.

11. The method according to any one of claims 1 to 10, further comprising, after said step of roasting, a step of micronization thereby obtaining a fermented roasted carob powder.

12. The method according to any one of claims 1 to 11, comprising the following steps:
i) optionally grinding carob pulp to a particle diameter from 0.03 to 1.5 cm,
ii) adding water to the ground carob pulp obtaining a wet carob pulp,
iii) fermenting carob pulp by a *S*. *cerevisiae* yeast;
iv) optionally drying the fermented carob from step ii) to a moisture content from 6 to 9%;
v) roasting the fermented carob obtained from step iii);
vi) optionally micronizing the fermented roasted carob from step iv) thereby obtaining a fermented roasted carob powder.

13. A fermented carob **characterized by** a fructose concentration of at least 6% w/w, preferably at least 8% w/w, more preferably said fermented carob is obtained by the method according to any one of claims 1 to 11.

14. Use of the carob powder according to claim 13, in the preparation of food products or beverages, preferably as a cocoa powder replacer in the preparation of food products or beverages, more preferably a chocolate, a dark chocolate or a milk chocolate, a cocoa-free chocolate, a vegan cocoa-free chocolate, snacks, biscuits, coatings, fillings, ganaches, mousses, puddings, chocolate drinks.

15. A food product or beverage comprising the carob powder according to claim 13, preferably wherein said food product or beverage is chocolate, preferably a dark chocolate or a milk chocolate, a cocoa-free chocolate, a vegan cocoa-free chocolate, snacks, biscuits, coatings, fillings, ganaches, mousses, puddings, chocolate drinks.
